# EUROPÄISCHE PATENTANMELDUNG

(11) **EP 1 254 945 A2**
(43) Veröffentlichungstag der Anmeldung: **06.11.2002**
(21) Anmeldenummer: 02007809.3
(22) Anmeldetag: 06.04.2002
(51) Int. Cl.: C10B 31/04, F16J 15/06

(54) **Füllteleskop mit einer elastisch deformierbaren Dichtung zur Abdichtung von Undichtigkeiten an der Kontaktfläche zwischen dem Teleskopunterteil und einem Fülllochrahmen**

(30) Priorität: 03.05.2001 DE 10121621
(71) Anmelder: Thyssen Krupp EnCoke GmbH, 44789 Bochum (DE)
(72) Erfinder: Knoch, Ralf, 45899 Gelsenkirchen (DE); Steih, Lothar, Dipl.Ing, 45279 Essen (DE)
(74) Vertreter: Albrecht, Rainer Harald, Dr.-Ing.

(57) **Zusammenfassung**

Die Erfindung betrifft eine Vorrichtung zur Abdichtung von Undichtigkeiten an der Kontaktfläche zwischen dem Teleskopunterteil eines Füllteleskopes (1) und einem Fülllochrahmen (2) in der Ofendecke eines Verkokungsofens. Die Vorrichtung weist eine elastisch deformierbare Dichtung auf (3), die in einem Ringraum (4) am Umfang des Teleskopunterteils angeordnet ist. Erfindungsgemäß weist die Dichtung einen elastischen Kern (7) und eine den Kern umgebende Wärmedämmschicht aus hochtemperaturbeständigen anorganischen Isolierfasern (8) auf.

## Beschreibung

Die Erfindung betrifft eine Vorrichtung zur Abdichtung von Undichtigkeiten an der Kontaktfläche zwischen dem Teleskopunterteil eines Füllteleskopes und einem Fülllochrahmen in der Ofendecke eines Verkokungsofens mit einer elastisch deformierbaren Dichtung, die in einem Ringraum am Umfang des Teleskopunterteils angeordnet ist.

In einem modernen Koksofenbetrieb werden bei Druck- und Füllvorgängen entstehende Emissionen an ihrem Entstehungsort abgesaugt. Ein besonders kritischer Punkt bezüglich des Austritts von Emissionen ist die Kontaktstelle zwischen dem Teleskopunterteil des an einen Kohlebeschickungswagen angeschlossen Füllteleskopes und dem Fülllochrahmen in der Ofendecke des Verkokungsofens, da durch spontane, heftige Entstehung von Füllgasen während des Einfüllens der Kohle in die leere, heiße Verkokungskammer kurzzeitig geringe Unterdrücke bis etwa 500 Pascal auftreten können. Das metallische Teleskopunterteil ist zwar als Dichtfläche ausgeformt und wird auf den Fülllochrahmen aufgesetzt, doch ergeben sich durch Verschmutzungen des Fülllochrahmens, durch teerhaltige Anbackungen und durch Unrundheiten von Fülllochrahmen und/oder Teleskopunterteil Undichtigkeiten. Weitere Undichtigkeiten resultieren bei einer etwaigen, durch das Füllteleskop nicht kompensierten Schräglage des Fülllochrahmens und wenn der Kohleauslass am Beschickungswagen mit der Öffnung in der Ofendecke nicht fluchtet und von dem Füllteleskop ein größerer Versatz ausgeglichen werden muss.

Eine aus DE-C 39 30 871 bekannte Vorrichtung zur Abdichtung der beschriebenen Undichtigkeiten weist eine elastisch deformierbare Dichtung auf, die in einem Ringraum am Umfang des Teleskopunterteils angeordnet ist. Die Dichtung ist als dünnwandiger Schlauch ausgebildet. Nach Absenken des Teleskopunterteils auf den Fülllochrahmen wird der Dichtungsschlauch mit Pressluft aufgeblasen und wird durch Aufweiten der schlauchförmigen Dichtung ein staub- und gasdichter Abschluss zwischen dem Teleskopunterteil und dem Fülllochrahmen hergestellt. Bei größeren Undichtigkeiten an der Kontaktfläche zwischen dem Teleskopunterteil und dem Fülllochrahmen ist die Dichtung zeitweise hohen Temperaturen ausgesetzt. Dabei besteht die Gefahr, dass der die Dichtung bildende dünnwandige Kunststoffschlauch thermisch geschädigt wird und seine Dauerelastizität verliert. Hinzu kommt, dass das empfindliche Kunststoffmaterial erheblichen mechanischen Beanspruchungen ausgesetzt wird. Aufgrund der mechanischen und thermischen Beanspruchungen ist die Standzeit der Dichtung in der Praxis unzureichend.

Der Erfindung liegt die Aufgabe zugrunde, für eine Vorrichtung der eingangs beschriebenen Zweckbestimmung eine Dichtung anzugeben, die bei ausreichender Formstabilität eine große Elastizität aufweist und hohen Temperaturen standhält.

Ausgehend von einer Vorrichtung mit den eingangs beschriebenen Merkmalen wird die Aufgabe erfindungsgemäß dadurch gelöst, dass die Dichtung einen elastischen Kern und eine den Kern umgebende Wärmedämmschicht aus hochtemperaturbeständigen anorganischen Isolierfasern aufweist. Beim Aufsetzen des Teleskopunterteiles auf den Fülllochrahmen wird die Dichtung komprimiert und deformiert. Der dauerelastische Kern der Dichtung weist eine ausreichende Stabilität auf, um ein vollständiges Zusammendrücken des Dichtringes bei einer Belastung mit dem Gewicht des Füllteleskopes zu verhindern. Hinzu kommt, dass der Ringraum die Deformation der Dichtung begrenzt und der Dichtung seitlichen Halt gibt. Die aus anorganischen Isolierfasern bestehende Wärmedämmschicht ist flexibel und passt sich Deformationen des elastischen Kerns an. Die Dicke der Wärmedämmschicht ist so bemessen, dass sich der elastische Kern der Dichtung im Dauerbetrieb nicht über eine durch das Material des Dichtungskerns vorgegebene zulässige Temperatur hinaus aufheizen kann. Dadurch behält die erfindungsgemäß ausgebildete Dichtung auch bei hohen Temperaturen ihre Festigkeit, Elastizität und Flexibilität bei. Die hochtemperaturbeständige Wärmedämmschicht wird zweckmäßig so bemessen, dass im Dauerbetrieb eine maximale Temperatur von ca. 200 °C im Kern der Dichtung nicht überschritten wird.

Der Kern der Dichtung kann aus einem vulkanisiertem Naturoder Synthesekautschuk bestehen. Bevorzugt ist ein vulkanisierter Siliconkautschuk (Silicongummi). Andere Materialien, z.B. Styrol-Butadien-Kautschuk (SBR), Polybutadien (BR), Nitrilkautschuk (NBR), Butylkautschuk (IIR), Chloroprenkautschuk (CR), Ethylen-Propylen-Terpolymere (EPDM) und dergleichen soll nicht ausgeschlossen sein. Der Kern der Dichtung ist vorzugsweise als Schlauch ausgebildet, wobei die Formstabilität sowie die Elastizität des Schlauches durch Auswahl der Shorehärte, durch Wahl des Innendurchmessers und der Wandstärke dem Anwendungsfall angepasst werden kann. Bevorzugt ist ein Silikonschlauch mit einer Temperaturbeständigkeit von etwa 250 °C.

Die Wärmedämmschicht der Dichtung kann beispielsweise Textilglasfasern, keramische Fasern, Gesteinsfasern, SiO₂-Fasern oder Fasermischungen der genannten Materialien aufweisen. Bevorzugt sind Materialien, z.B. SiO₂, mit einer Dauertemperaturbeständigkeit von ca. 1.000 °C. Die Wärmedämmschicht der Dichtung kann aus einem mechanisch verfestigten Vlies, einem Gewebe oder einem Gewirke bestehen. Vorzugsweise ist der elastische Kern der Dichtung mehrfach mit einem aus hochtemperaturbeständigem Garn gefertigten textilen Flächengebilde, z.B. einem Gewebestreifen, umwickelt, so dass eine mehrlagige Wärmedämmschicht resultiert.

Zur Verbesserung der Abriebfestigkeit kann die Dichtung eine die Wärmedämmschicht umgehende verschleißfeste Schutzschicht aufweisen. Als Schutzschicht eignet sich beispielsweise eine dünne Metallfolie oder ein Geflecht aus einem dünnen Metalldraht. Gemäß einer bevorzugten Ausführung der Erfindung besteht die Wärmedämmschicht der Dichtung oder eine Außenschicht der Wärmedämmschicht aus einem textilen Flächengebilde aus verschleißfesten, mit einem Metalldraht umflochtenen Garnen. Bei dieser Ausführung erhält jedes einzelne Garn eine Umklöppelung aus einem dünnen Metallfaden aus z.B. rostfreiem Stahl.

Das Teleskopunterteil kann eine Ringnut zur Aufnahme der Dichtung aufweisen. Gemäß einer bevorzugten Ausführung der Erfindung ist die Dichtung in einem ringförmigen, am Umfang des Teleskopunterteiles gasdicht angeschlossenen Halter angeordnet. Die Fixierung des Dichtringes im Halter erfolgt durch Befestigungsmittel in Form von Schrauben, Klemmen und dergleichen oder vorzugsweise durch Verklebung mit einer schnell abbindenden, dauerelastischen Masse, z.B. einer Siliconmasse.

Die erfindungsgemäße Vorrichtung zeichnet sich durch beachtliche Vorteile aus. So wird die Kontaktfläche zwischen dem Teleskopunterteil eines an einen Kohlebeschickungswagen angeschlossen Füllteleskopes und einem in der Ofendecke befindlichen Fülllochrahmen bei auftretendem Überdruck in der Verkokungskammer zuverlässig abgedichtet. Eine gas- und staubdichte Abdichtung ist auch bei Schräglage der Fülllochrahmen gewährleistet. Die hohe Temperaturbeständigkeit und Verschleißfestigkeit des erfindungsgemäßen Dichtungsringes ermöglichen lange Wechselintervalle der Dichtungsringe. Die aufeinander abgestimmte Temperaturbeanspruchung des elastischen Kerns der Dichtung und der den Kern umgebenden Wärmedämmschicht sorgt für ein gleichbleibendes Elastizitäts- und Dichtungsverhalten über die gesamte Lebensdauer der Dichtung.

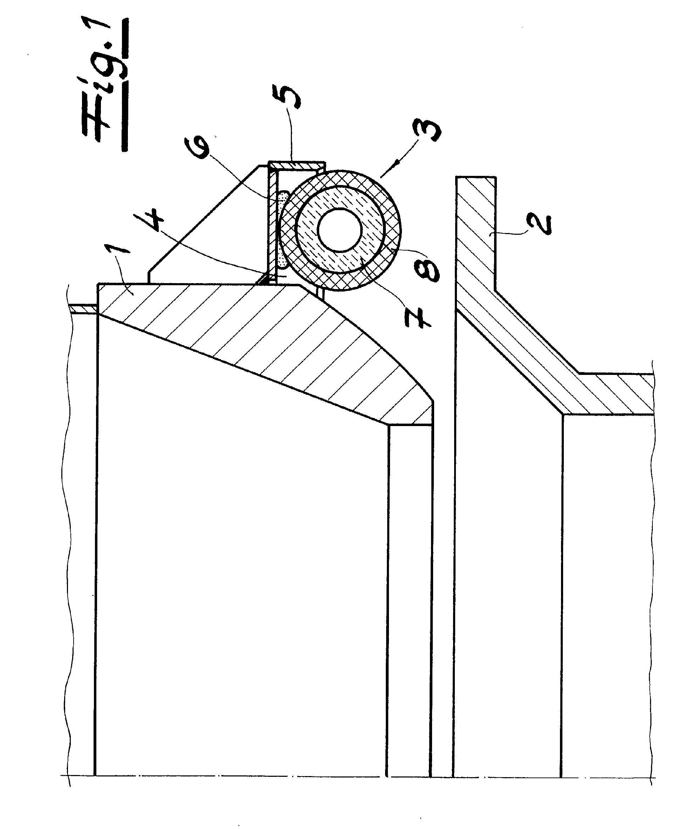

Im Folgenden wird die Erfindung anhand einer lediglich ein Ausführungsbeispiel darstellenden Zeichnung erläutert. Es zeigen schematisch
- Fig. 1: einen Ausschnitt aus dem Teleskopunterteil eines an einen Kohlebeschickungswagen angeschlossen Füllteleskopes mit einer erfindungsgemäßen Vorrichtung zur Abdichtung von Undichtigkeiten, und
- Fig. 2: den Gegenstand der Fig. 1 nach Absenken des Teleskopunterteiles auf einen Fülllochrahmen in der Ofendecke eines Verkokungsofens.

Die in den Figuren dargestellte Vorrichtung dient der Abdichtung von Undichtigkeiten an der Kontaktfläche zwischen dem Teleskopunterteil 1 eines Füllteleskopes und einem Fülllochrahmen 2 in der Ofendecke eines Verkokungsofens. Die Vorrichtung weist eine elastisch deformierbare Dichtung 3 auf, die in einem Ringraum 4 am Umfang des Teleskopunterteiles 1 angeordnet ist. Im Ausführungsbeispiel ist die Dichtung 3 in einem ringförmigen, am Umfang des Teleskopunterteiles 1 gasdicht angeschlossenen Halter 5 angeordnet. Die Fixierung der Dichtung 3 erfolgt durch eine dauerelastische Klebemasse 6, jedoch können in der Halterung auch Schrauben sowie andere Klemmeinrichtungen eingesetzt werden.

Die ringförmige Dichtung 3 weist einen elastischen Kern 7 und eine den Kern 7 umgebende Wärmedämmschicht 8 aus hochtemperaturbeständigen anorganischen Isolierfasern auf. Der Kern 7 der Dichtung 3 besteht aus einem vulkanisierten Natur- oder Synthesekautschuk, vorzugsweise Silicongummi, und ist im Ausführungsbeispiel schlauchförmig ausgebildet. Durch Auswahl der Shorehärte, des Innendurchmessers des den Kern 7 bildenden Siliconschlauches sowie der Wandstärke des Schlauches kann die Formstabilität und das Federverhalten der Dichtung 3 dem Anwendungsfalls angepasst werden.

Die Wärmedämmschicht 8 der Dichtung 3 besteht aus hochtemperaturbeständigen Fasern, z.B. Textilglasfasern, keramischen Fasern, SiO₂-Fasern und dergleichen. Die Wärmedämmschicht weist je nach Material eine Dauertemperaturbeständigkeit zwischen 800 und 1.200 °C auf. Die Dicke der Wärmedämmschicht 8 ist so bemessen, dass sich der elastische Kern 7 im Dauerbetrieb nicht über eine maximal zulässige Temperatur aufheizen kann. Vorzugweise ist die Anordnung so getroffen, dass im Dauerbetrieb eine Maximaltemperatur von ca. 200 °C im Kern 7 der ringförmigen Dichtung 3 nicht überschritten wird.

Die Wärmedämmschicht 8 der Dichtung 3 kann aus einem mechanisch verfestigten Vlies, einem Gewebe oder einem Gewirke bestehen. Vorzugsweise ist die Wärmedämmschicht 8 mehrlagig ausgebildet und wird durch mehrfaches Umwickeln des elastischen Kerns 7 mit einem textilen Flächengebilde, z.B. einem Gewebestreifen, hergestellt.

Die Dichtung 3 kann eine die Wärmedämmschicht umgebende, in den Figuren nicht dargestellte, verschleißfeste Schutzschicht aufweisen. Die Verschleißschutzschicht kann beispielsweise dadurch hergestellt werden, dass die hochtemperaturbeständigen Garne des die Außenschicht bildenden textilen Flächengewebes jeweils eine Umklöppelung aus einem Metallfaden, vorzugsweise aus rostfreiem Stahl, erhalten.

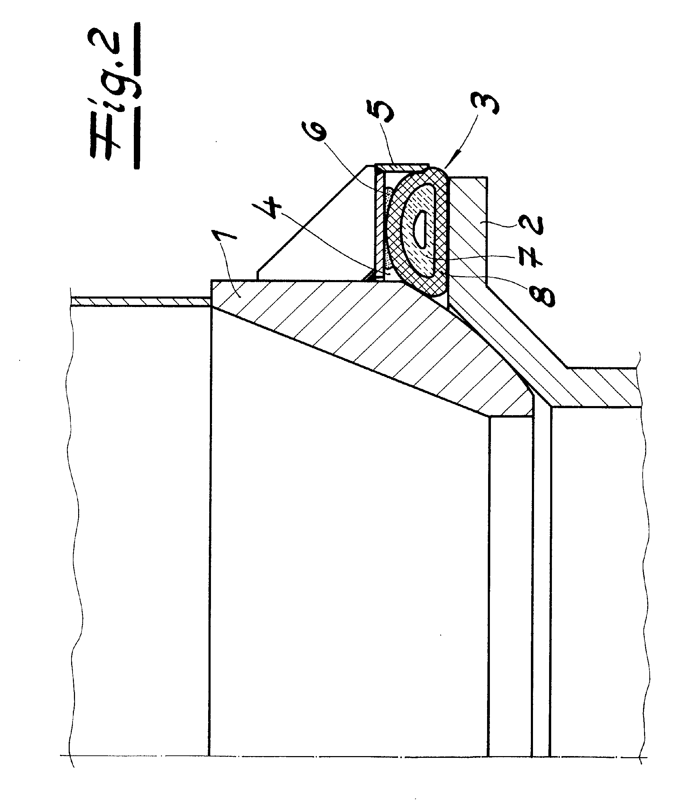

In Fig. 2 ist das mit der erfindungsgemäßen Vorrichtung ausgebildete Teleskopunterteil 1 auf einen Fülllochrahmen 2 in der Ofendecke eines Verkokungsofens abgesenkt. Die Dichtung 3 liegt auf einer Ringfläche des Fülllochrahmens 2 auf und wird dabei elastisch deformiert. Die aus anorganischen Fasern bestehende Wärmedämmschicht 8 ist flexibel und passt sich an die Deformation des elastischen Kerns 7 an. Der elastische, schlauchförmige Kern 7 besitzt eine ausreichende Formstabilität, die ein vollständiges Zusammendrücken der Dichtung 3 bei Belastung mit dem Gewicht des Füllteleskopes verhindert. Der Ringraum 4 des Halters 5 gibt der Dichtung 3 seitlichen Halt. Die Dichtung 3 besitzt eine ausreichende Elastizität, um Höhenunterschiede auf dem Fülllochrahmen 2 infolge von Verschmutzungen und Anbackungen auszugleichen. Ferner können etwaige Schräglagen des Fülllochrahmens 2, die durch das Füllteleskop nicht kompensiert werden, ebenfalls ausgeglichen werden.

## Patentansprüche

1. Vorrichtung zur Abdichtung von Undichtigkeiten an der Kontaktfläche zwischen dem Teleskopunterteil (1) eines Füllteleskopes und einem Fülllochrahmen (2) in der Ofendecke eines Verkokungsofens, - mit einer elastisch deformierbaren Dichtung (3), die in einem Ringraum (4) am Umfang des Teleskopunterteils (1) angeordnet ist, **dadurch gekennzeichnet**, die Dichtung (3) einen elastischen Kern (7) und eine den Kern (7) umgebende Wärmedämmschicht (8) aus hochtemperaturbeständigen anorganischen Isolierfasern aufweist.

2. Vorrichtung nach Anspruch 1, **dadurch gekennzeichnet, dass** der Kern (7) der Dichtung (3) aus vulkanisiertem Natur- oder Synthesekautschuk besteht.

3. Vorrichtung nach Anspruch 1 oder 2, **dadurch gekennzeichnet, dass** der Kern (7) der Dichtung (3) schlauchförmig ausgebildet ist.

4. Vorrichtung nach einem der Ansprüche 1 bis 3, **dadurch gekennzeichnet, dass** die Wärmedämmschicht (8) der Dichtung (3) Textilglasfasern, keramische Fasern, Gesteinsfasern, SiO₂-Fasern oder Fasermischungen der genannten Materialien aufweist.

5. Vorrichtung nach einem der Ansprüche 1 bis 4, **dadurch gekennzeichnet, dass** die Wärmedämmschicht (8) der Dichtung (3) aus einem mechanisch verfestigten Vlies, einem Gewebe oder einem Gewirke besteht.

6. Vorrichtung nach einem der Ansprüche 1 bis 5, **dadurch gekennzeichnet, dass** die Wärmedämmschicht (8) der Dichtung (3) durch Umwicklung des Kerns (7) mit einem textilen Flächengebilde mehrlagig ausgebildet ist.

7. Vorrichtung nach einem der Ansprüche 1 bis 6, **dadurch gekennzeichnet, dass** die Dichtung (3) eine die Wärmedämmschicht (8) umgebende verschleißfeste Schutzschicht aufweist.

8. Vorrichtung nach einem der Ansprüche 1 bis 7, **dadurch gekennzeichnet, dass** die Wärmedämmschicht (8) der Dichtung (3) oder eine Außenschicht der Wärmedämmschicht (8) aus einem textilen Flächengebilde aus mit einem Metallfaden umflochtenen Garnen besteht.

9. Vorrichtung nach einem der Ansprüche 1 bis 8, **dadurch gekennzeichnet, dass** die Dichtung (3) in einem ringförmigen, am Umfang des Teleskopunterteiles (1) gasdicht angeschlossenen Halter (5) angeordnet ist.
